# EUROPEAN PATENT APPLICATION

(11) **EP 2 253 984 A1**
(43) Date of publication of application: **24.11.2010**
(21) Application number: 10004595.4
(22) Date of filing: 30.04.2010
(51) Int. Cl.: G02B 21/06, G02B 21/00

(54) **Microscope**

(30) Priority: 30.04.2009 JP 2009111398; 15.05.2009 JP 2009119294
(71) Applicant: OLYMPUS CORPORATION, Shibuya-ku Tokyo 151-0072 (JP)
(72) Inventor: Utsugi, Hironori, Tokyo 151-0072 (JP); Murai, Mika, Tokyo 151-0072 (JP); Obuchi, Hideki, Tokyo 151-0072 (JP); Miyamoto, Hirofumi, Tokyo 151-0072 (JP)
(74) Representative: von Hellfeld, Axel

(57) **Abstract**

A microscope (100; 200; 300; 400) includes a wire grid polarizing beam splitter (12) that reflects a light emitted from a light source (7) to a direction of an observation optical axis to cause the light to enter an objective lens (13), and transmits a reflected light from a specimen (2) to cause the reflected light to enter an imaging lens (16); and a quarter wavelength plate (15) that is placed between the objective lens (13) and the specimen (2).

## Description

### TECHNICAL FIELD

The present invention relates to a microscope that illuminates a specimen with coaxial incident-light illumination.

### BACKGROUND ART

Conventionally, a microscope is equipped with a plurality of objective lenses of different magnifications mounted on a revolving nosepiece, and makes an observation of a specimen while changing the magnification. However, in an observation with an objective lens of relatively low magnification, there is a problem in that due to the low curvature of the lens, an illumination light is reflected, which results in the occurrence of flare on an observation image. To prevent this, a polarization optical system is used in which a polarizer is placed between a light source and a half mirror, an analyzer is placed between the half mirror and an imaging lens, and a quarter wavelength plate is placed between the objective lens and a specimen, whereby only the reflected light at the face of the objective lens is cut by the analyzer.

Furthermore, there is disclosed a technology for removing flare due to reflection at the face of an objective lens in a polarization optical system in which a prism-type polarizing beam splitter is used instead of a half mirror, and a quarter wavelength plate is placed between the objective lens and a specimen (for example, see Japanese Laid-open Patent Publication No. 2002-311388).

Moreover, in an observation of a specimen that has a hubbly surface with microasperities like a circuit pattern formed on a semiconductor wafer and a substantially uniform reflectance over the whole surface, a differential interference contrast microscope, which uses the interference of light and forms an observation image by converting an optical phase difference corresponding to the microasperities into contrast of light and dark, is used (for example, see Japanese Laid-open Patent Publication No. 2000-275533).

However, in a polarization optical system and a differential interference contrast system using a half mirror and a polarizing element, in addition to a light quantity loss in the half mirror, an attenuation of light quantity occurs in the polarizer and the analyzer, so a light quantity of the light source needs to be increased to obtain the brightness of an observation image, which leads to an increase in size and power consumption.

Furthermore, to meet the field requirement in an observation at low magnification, a light source capable of emitting a luminous flux having a large diameter is required; however, if a prism-type polarizing beam splitter capable of handling a luminous flux having a large diameter is used as a half mirror, the apparatus size is undesirably increased.

### DISCLOSURE OF INVENTION

A microscope according to an aspect of the present invention includes a wire grid polarizing beam splitter that reflects light emitted from a light source to a direction of an observation optical axis to cause the light to enter an objective lens, and transmits a reflected light from a specimen to cause the reflected light to enter an imaging lens; and a quarter wavelength plate that is placed between the objective lens and the specimen.

The above and other features, advantages and technical and industrial significance of this invention will be better understood by reading the following detailed description of presently preferred embodiments of the invention, when considered in connection with the accompanying drawings.

### BRIEF DESCRIPTION OF DRAWINGS

FIG. 1 is a right side view illustrating a schematic configuration of a microscope according to a first embodiment.
FIG. 2 is a longitudinal sectional view of a leading end portion of an objective lens mounting a quarter wavelength plate.
FIG. 3 is a cross-sectional view of the objective lens along the line X-X shown in FIG. 2.
FIG. 4 is a right side view illustrating a schematic configuration of a microscope according to a second embodiment.
FIG. 5 is a right side view illustrating a schematic configuration of a microscope according to a third embodiment.
FIG. 6 is a right side view illustrating a schematic configuration of a microscope according to a fourth embodiment.
FIG. 7 is a horizontal sectional view of an optical-element switching device.
FIG. 8 is a right side view illustrating a schematic configuration of a microscope according to a fifth embodiment.
FIG. 9 is a horizontal sectional view of a revolving nosepiece for illustrating a slider unit including a differential interference contrast prism and a quarter wavelength plate, which are switchably placed on an optical axis between a polarizing beam splitter and the objective lens.
FIG. 10 is a diagram illustrating a schematic configuration of an illumination optical system and an observation optical system in the microscope according to the fifth embodiment.
FIG. 11 is a horizontal sectional view of the revolving nosepiece for illustrating the slider unit when the observation method is switched from a differential interference contrast observation as shown in FIG. 8 to a bright-field observation.
FIG. 12 is a diagram illustrating a schematic configuration of the illumination optical system and the observation optical system in a state shown in FIG. 11.
FIG. 13 is a horizontal sectional view of the revolving nosepiece for illustrating a slider unit used in a microscope according to a sixth embodiment.

### BEST MODE(S) FOR CARRYING OUT THE INVENTION

Embodiments of a microscope according to the present invention are explained in detail below with reference to the accompanying drawings. The present invention is not limited to the embodiments, and various modifications can be made without departing from the scope of the present invention.

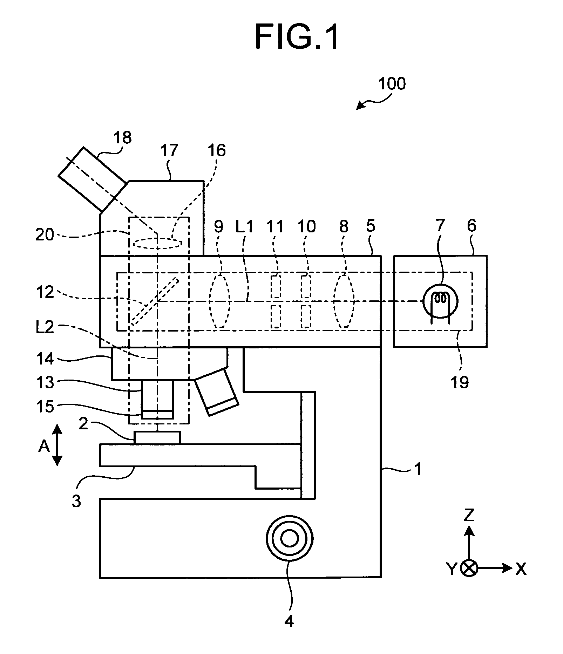

FIG. 1 is a right side view illustrating a schematic configuration of a microscope 100 according to a first embodiment of the present invention. On the side of the lower part of a microscope main body 1, a movable stage 3, which can be moved in an up-and-down direction (the Z-axis direction) indicated by an arrow A, is mounted. A specimen 2 is put on a top surface of the stage 3. Furthermore, on the side surface of the microscope main body 1, a focus handle 4 in a focusing mechanism for moving the stage 3 in the up-and-down direction is mounted.

An incident-light illumination and imaging unit 5 is mounted on the upper side of the microscope main body 1, and a light source unit 6 is mounted on the side of the back surface of the incident-light illumination and imaging unit 5. The light source unit 6 incorporates a light source 7 that projects emission light toward inside the incident-light illumination and imaging unit 5. A halogen lamp, an LED, or the like is used as the light source 7. The incident-light illumination and imaging unit 5 is equipped with predetermined optical elements, such as illumination lenses 8 and 9, an aperture stop 10, a field stop 11, and a wire grid polarizing beam splitter 12, on an incident-light illumination optical axis L1. The specimen 2 is illuminated by the use of a coaxial incident-light illumination system 19 composed of the light source 7, the illumination lenses 8 and 9, the aperture stop 10, the field stop 11, and the wire grid polarizing beam splitter 12 for optical-path switching.

The wire grid polarizing beam splitter 12 is a polarizing plate that a number of nanometer-level wire-like grids are formed on a substrate, and is placed on the incident-light illumination optical axis L1 at an angle of 45 degrees thereby functioning as a polarizing beam splitter.

The illumination light emitted from the light source 7 enters the illumination lens 8, and passes through the aperture stop 10, the field stop 11, and the illumination lens 9, and then is reflected by the wire grid polarizing beam splitter 12, whereby a conjugate image of the light source 7 is formed on the pupil of an objective lens 13. The wire grid polarizing beam splitter 12 polarizes the incident light into linear polarized lights, and reflects only the S-polarized light to a direction of an observation optical axis L2 perpendicular to the incident-light illumination optical axis L1. After that, the illumination light (the S-polarized light) reflected by the wire grid polarizing beam splitter 12 is delivered to the specimen 2 by the objective lens 13.

The aperture stop 10 is placed at the position conjugate to the pupil of the objective lens 13, and the numerical aperture NA is adjusted by adjusting the aperture stop 10. The field stop 11 is placed at the position conjugate to the focal position of the objective lens 13, and a field of view is adjusted by adjusting the field stop 11.

The incident-light illumination and imaging unit 5 is equipped with a revolving nosepiece 14 on the observation optical axis L2 perpendicular to the incident-light illumination optical axis L1 on the underside thereof. A plurality of objective lenses 13 of different magnifications are mounted on the revolving nosepiece 14. The revolving nosepiece 14 can selectively place any one of the objective lenses 13 on the observation optical axis L2 with the rotating operation. Due to the rotation of the focus handle 4, the stage 3 is moved in the up-and-down direction indicated by the arrow A by the focusing mechanism (not shown), whereby focusing on the specimen 2 with respect to the objective lenses 13 is adjusted. A quarter wavelength plate 15 is mounted on a leading end of the objective lens 13, and converts the linear polarized light reflected by the wire grid polarizing beam splitter 12 into a circular polarized light.

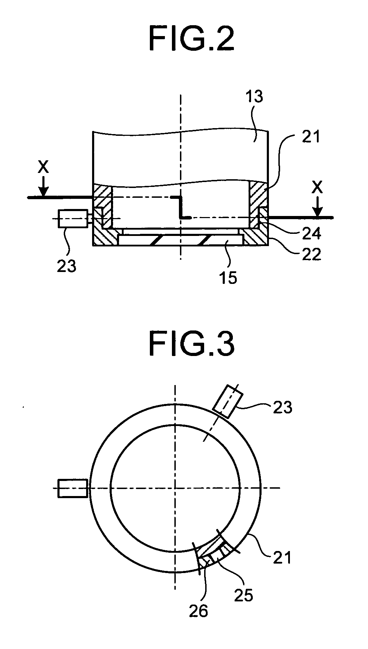

FIG. 2 is a longitudinal sectional view of a leading end portion of the objective lens 13 mounting the quarter wavelength plate 15, and FIG. 3 is a cross-sectional view, of the leading end portion of the objective lens 13, taken along line X-X shown in FIG. 2. An engagement portion 24 is formed on an outer circumferential surface of a leading end portion of an objective-lens holding frame 21, and is engaged with an inner circumferential surface of a quarter-wavelength-plate holding frame 22. The objective-lens holding frame 21 and the quarter-wavelength-plate holding frame 22 are fixed by a fixation knob 23. Furthermore, as shown in FIG. 3, a rotation control pin 25 for attaching the quarter-wavelength-plate holding frame 22 to the objective-lens holding frame 21 with the quarter wavelength plate 15 positioned is provided on the quarter-wavelength-plate holding frame 22. The rotation of the quarter wavelength plate 15 is prevented by fitting the rotation control pin 25 into a groove 26 formed on the objective-lens holding frame 21.

By the configuration as shown in FIGS. 2 and 3, the quarter wavelength plate 15 is mounted on the leading end portion of the objective lens 13, and the reflected light from the wire grid polarizing beam splitter 12 and the reflected light from the specimen 2 repeatedly pass through the quarter wavelength plate 15, whereby observation light (P-polarized light) exiting the quarter wavelength plate 15 differs in phase by π (90 degrees) from illumination light (S-polarized light) incident from the wire grid polarizing beam splitter 12. The light reflected by the face of the objective lens 13 is not transmitted through the wire grid polarizing beam splitter 12, and the light is prevented from entering an imaging lens 16, and thus it is possible to prevent flare from occurring. As shown in FIGS. 2 and 3, if the fixation knob 23 is removed, the quarter wavelength plate 15 can be removed together with the quarter-wavelength-plate holding frame 22 from the objective-lens holding frame 21, which means it is also possible to make an observation of polarization by removing the quarter wavelength plate 15. In this manner, the quarter wavelength plate 15 is configured to be insertable and removable, so, for example, when halation occurs due to a type of the specimen 2, an observation of polarization can be made by removing the quarter wavelength plate 15, and an observation of image with halation suppressed can be easily made.

Above the incident-light illumination and imaging unit 5, a tube 17 incorporating the imaging lens 16 is provided on the observation optical axis L2. On the upper part of the tube 17, an eyepiece 18 is mounted. An observation optical system 20 is composed of the quarter wavelength plate 15, the objective lens 13, the wire grid polarizing beam splitter 12, and the imaging lens 16, and imaging of the specimen 2 is observed with the observation optical system 20 and the eyepiece 18. The optical elements composing the observation optical system 20 are placed on the observation optical axis L2.

The wire grid polarizing beam splitter 12 reflects a light, which has been emitted from the light source 7 and transmitted through the illumination lens 8, the aperture stop 10, the field stop 11, and the illumination lens 9, as linear polarized lights, and after the quarter wavelength plate 15 converts the linear polarized light passing through the objective lens 13 into a circular polarized light, the light is delivered to the specimen 2. After the delivered light is reflected by the specimen 2, the light is transmitted through the quarter wavelength plate 15, the objective lens 13, and the wire grid polarizing beam splitter 12, and imaged by the imaging lens 16, and then the imaging is observed through the eyepiece 18.

The light, which has been emitted from the light source 7, passed through the coaxial incident-light illumination system 19, and reflected to the direction of the observation optical axis L2 by the wire grid polarizing beam splitter 12, passes through the objective lens 13; however, if the curvature of the objective lens 13 is low, a portion of the light is reflected by the face of the objective lens 13. Out of the light reflected by the face of the objective lens 13, the light reflected to the direction of the observation optical axis L2 enters the wire grid polarizing beam splitter 12; however, the light remains S-polarized light, so the light is reflected by the wire grid polarizing beam splitter 12, and does not enter the imaging lens 16 on the observation optical axis L2. Therefore, it is possible to suppress the occurrence of flare in the objective lens. Furthermore, the wire grid polarizing beam splitter 12 can keep an attenuation of light quantity lower as compared with a commonly-used half mirror, so the brightness can be ensured without increasing a light quantity of the light source. Moreover, even when the light source 7 capable of emitting a luminous flux having a large diameter enough to meet the field requirement in an observation at low magnification is used, the compact apparatus can be achieved.

Subsequently, a second embodiment of the present invention is explained. In the second embodiment, a second polarizing element for generating polarized light in the same direction as a direction of vibration of linear polarized light reflected by the wire grid polarizing beam splitter 12 is placed in a coaxial incident-light illumination system 19A, and a third polarizing element for generating polarized light in the same direction as a direction of vibration of a linear polarized light that the wire grid polarizing beam splitter 12 transmits is placed in an observation optical system 20A, whereby a polarization property of the light used for an observation of a specimen is improved, thereby enabling the further removal of flare.

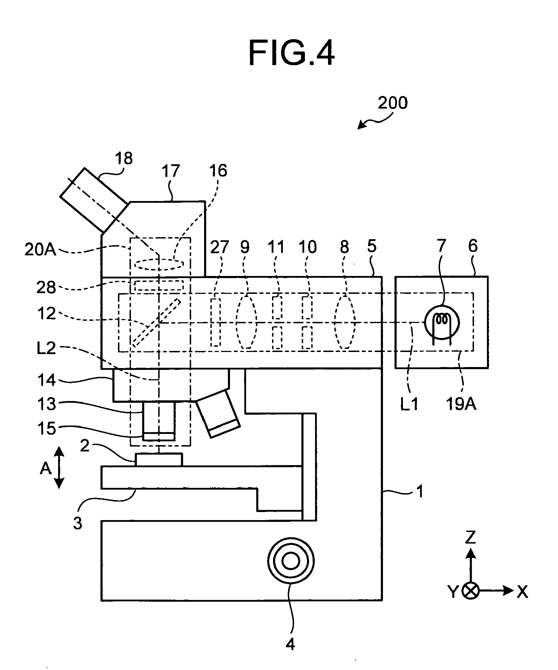

FIG. 4 is a right side view illustrating a schematic configuration of a microscope 200 according to the second embodiment. In the microscope 200 according to the second embodiment, a polarizer 27 as the second polarizing element is placed between the illumination lens 9 and the wire grid polarizing beam splitter 12 in the coaxial incident-light illumination system 19A, and an analyzer 28 as the third polarizing element is placed between the imaging lens 16 and the wire grid polarizing beam splitter 12 in the observation optical system 20A.

The polarizer 27 is placed so as to extract linear polarized light (S-polarized light) in the same vibration direction as that of linear polarized light reflected by the wire grid polarizing beam splitter 12 from the illumination light emitted from the light source 7, and the analyzer 28 is placed so as to extract linear polarized light (P-polarized light) in the same vibration direction as that of linear polarized light that the wire grid polarizing beam splitter 12 transmits, thereby increasing an extinction ratio and improving a polarization property of the light used for an observation of imaging of the specimen 2, which enables the further removal of flare.

In the second embodiment, both the polarizer 27 and the analyzer 28 are placed; however, a polarization property of the light used for an observation of a specimen can be improved just by placing any one of the two.

Subsequently, a third embodiment of the present invention is explained. In the third embodiment, a zoom tube 29 is placed between the imaging lens 16 and the wire grid polarizing beam splitter 12; since the coaxial incident-light illumination system 19A is placed between the zoom tube 29 and the objective lens 13, the ray height in a zoom lens is reduced, and even a compact zoom lens makes it possible to ensure a necessary field of view. Furthermore, by the use of the wire grid polarizing beam splitter 12, not only the occurrence of flare is prevented, but also the field requirement for a whole field of view within a zoom range can be met without increasing the size of an illumination device.

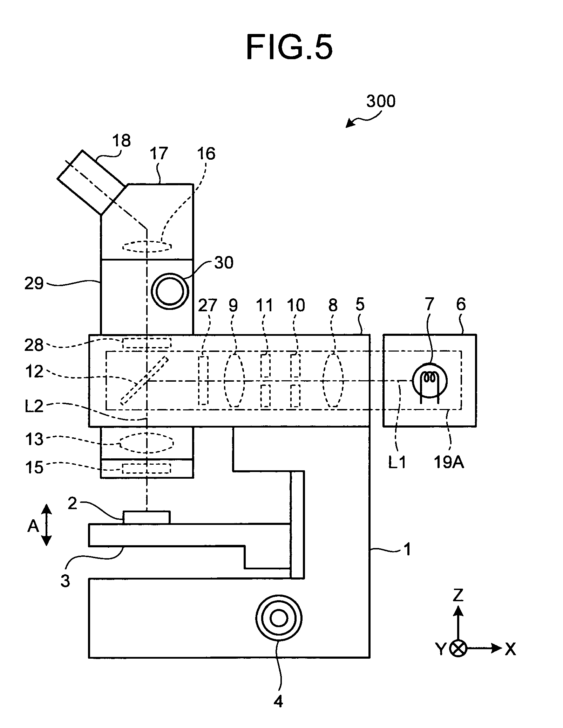

FIG. 5 is a right side view illustrating a schematic configuration of a microscope 300 according to the third embodiment. In the microscope 300 according to the third embodiment, the zoom tube 29 incorporating a variable magnification optical system (not shown) is placed between the incident-light illumination and imaging unit 5 incorporating the coaxial incident-light illumination system 19A and the tube 17 incorporating the imaging lens 16.

The zoom tube 29 is equipped with the variable magnification optical system (not shown), which is composed of a plurality of zoom lenses, and a zoom handle 30, and an observation by varying a zoom/magnification ratio can be made by the zoom/magnification ratio varying operation performed by rotation of the zoom handle 30.

The wire grid polarizing beam splitter 12 reflects light, which has been emitted from the light source 7 and transmitted through the illumination lens 8, the aperture stop 10, the field stop 11, the illumination lens 9, and the polarizer 27, as linear polarized light, and after the quarter wavelength plate 15 converts the linear polarized light passing through the objective lens 13 into circular polarized light, the light is delivered to the specimen 2. After the delivered light is reflected by the specimen 2, the light is again transmitted through the quarter wavelength plate 15, the objective lens 13, the wire grid polarizing beam splitter 12, and the analyzer 28, and enters the variable magnification optical system, and then is imaged by the imaging lens 16.

In the microscope 300 according to the third embodiment, the coaxial incident-light illumination system 19A is placed between the zoom tube 29 and the objective lens 13, whereby the ray height in the zoom lens is reduced, and a bright observation image with a wide field of view can be obtained even with a compact zoom lens. Furthermore, by the placement of the wire grid polarizing beam splitter 12, the polarizer 27, and the analyzer 28, a polarization property of the illumination light is improved, and an attenuation of light quantity is kept low, and the reflected light at the face of the objective lens 13 is prevented from entering the imaging lens 16 thereby preventing the occurrence of flare effectively.

Subsequently, a fourth embodiment of the present invention is explained. A microscope 400 according to the fourth embodiment is equipped with an optical-element switching device 31 for switching the wire grid polarizing beam splitter to be placed on the observation optical axis L2 between wire grid polarizing beam splitters 12 (12A, 12B) with different extinction ratios. By the switching placement of the wire grid polarizing beam splitters 12 (12A, 12B) with different extinction ratios by the optical-element switching device 31, an observation of an image with a degree of halation removal changed can be made.

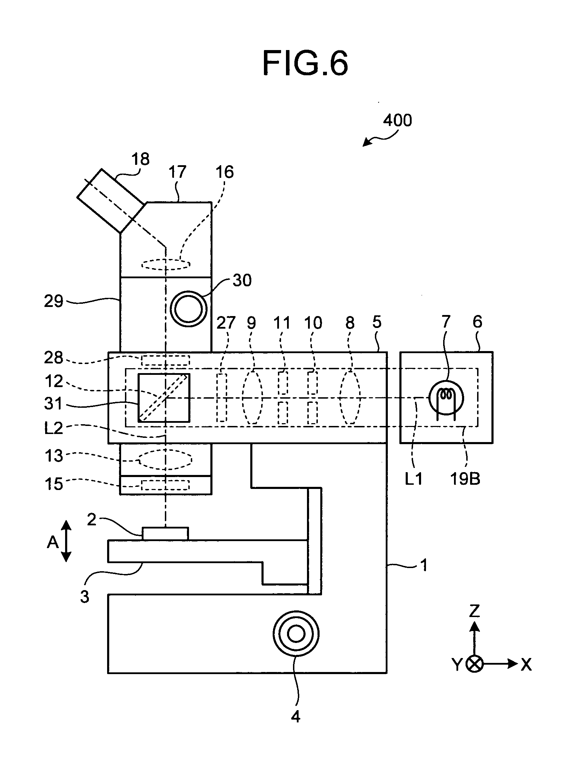

FIG. 6 is a right side view illustrating a schematic configuration of the microscope 400 according to the fourth embodiment. As shown in FIG. 6, the microscope 400 according to the fourth embodiment is equipped with the optical-element switching device 31 for switching the placement of the wire grid polarizing beam splitter 12 on the observation optical axis L2.

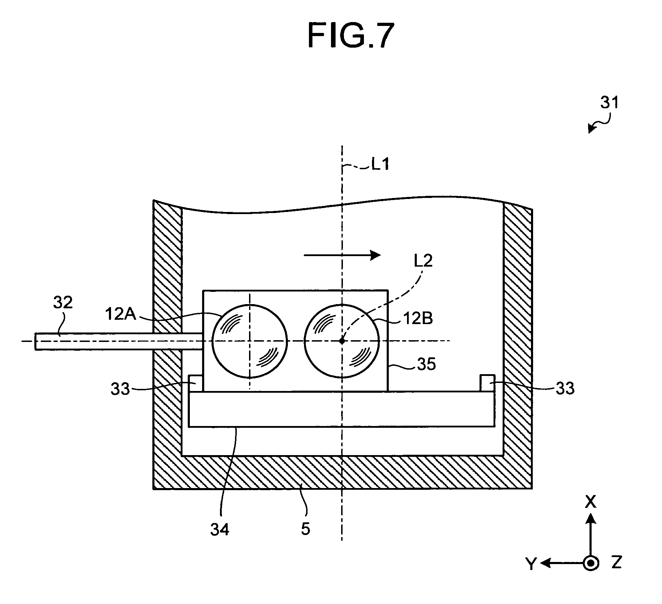

FIG. 7 is a horizontal sectional view of the optical-element switching device 31. A holding member 35 holds the wire grid polarizing beam splitter 12A with a high extinction ratio and the wire grid polarizing beam splitter 12B with an extinction ratio lower than that of the wire grid polarizing beam splitter 12A, and an operation knob 32 for moving the holding member 35 from outside the incident-light illumination and imaging unit 5 is attached to the holding member 35. The holding member 35 is slidably engaged with a guide 34, and makes a reciprocating movement in the Y-axis direction by the operation of the operation knob 32.

When the holding member 35 is moved in a direction of the arrow shown in FIG. 7 by the operation of the operation knob 32, the movement is restricted in a condition where an end of the holding member 35 is in contact with a control pin 33 placed at an end of the guide 34, and locked, for example, by a click mechanism (not shown) or the like. The control pins 33 placed at the both ends of the guide 34 are provided for restricting the moving range of the holding member 35, and the wire grid polarizing beam splitters 12A and 12B with different extinction ratios are positioned on the observation optical axis L2 by the control pins 33.

When a luminance difference of the reflected light from the specimen 2 is large, the wire grid polarizing beam splitter 12A with the high extinction ratio is placed on the observation optical axis L2, which enables an observation of an image with halation reduced; when an amount of reflected light from the specimen 2 is small, the wire grid polarizing beam splitter 12B with the low extinction ratio is placed on the observation optical axis L2, which enables an observation of an image with a light quantity ensured.

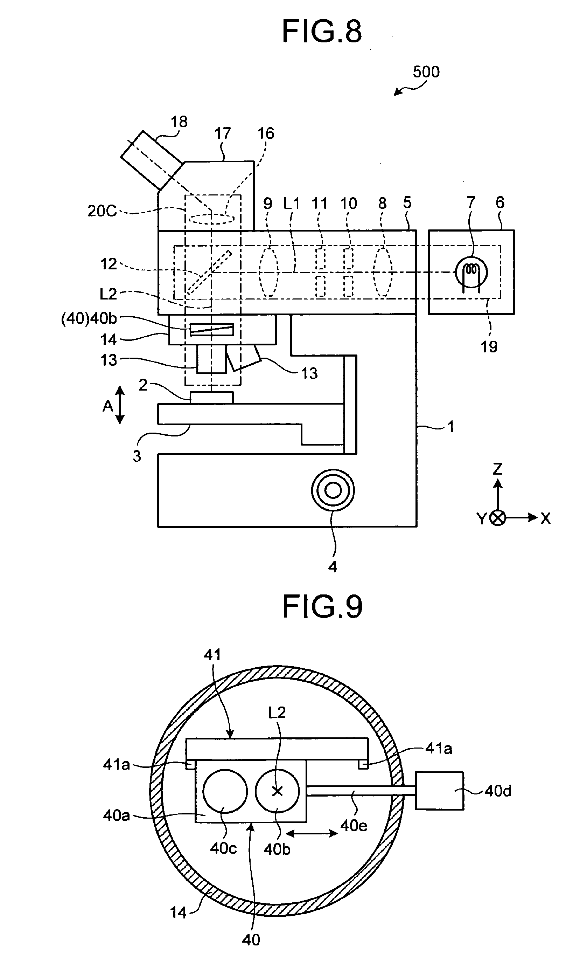

Subsequently, a fifth embodiment of the present invention is explained. FIG. 8 is a right side view illustrating a schematic configuration of a microscope according to the fifth embodiment, and FIG. 9 is a horizontal sectional view of a revolving nosepiece fitted with a slider unit including a differential interference contrast prism and a quarter wavelength plate, which are switchably placed on an optical axis between a polarizing beam splitter and an objective lens.

A microscope 500 is, as shown in FIG. 8, provided with the revolving nosepiece 14 on which the plurality of objective lenses 13 are removably mounted at the position opposed to the tube 17 on the lower part thereof. A slider unit 40 for switching the observation method is movably inserted and fitted in the revolving nosepiece 14 so that the slider unit 40 can move in the Y-axis direction.

The slider unit 40 is, as shown in FIG. 9, a unit that a Nomarski prism, i.e., a differential interference contrast prism (hereinafter, referred to as a "DIC prism") 40b and a quarter wavelength plate (hereinafter, referred to as a "λ/4 plate") 40c are held by a plate-like holder 40a, and an operation shaft 40e provided with an operation knob 40d for the sliding operation is attached to a side surface of the holder 40a. A guide member 41 for guiding the holder 40a and a slide of the holder 40a is installed inside the revolving nosepiece 14. A user holds and operates the operation knob 40d, which is provided at an end of the operation shaft 40e extending from a wall surface of the revolving nosepiece 14, and the holder 40a is slid in a direction indicated by arrows while being guided by the guide member 41. At this time, the slide position of the holder 40a in the direction of arrows is controlled by control members 41a provided on the guide member 41. Furthermore, FIG. 9 shows a state where the DIC prism 40b is placed on the optical axis L2 of an observation optical system 20C.

The stage 3 is a movable stage on which the specimen 2, an object to be observed, is put. As shown in FIG. 8, the stage 3 can be moved in a direction of an optical axis of the objective lens 13 (the Z-axis direction) by the rotating operation of the focus handle 4, and a focus adjustment is made by changing a relative distance between the specimen 2 and the objective lens 13. The stage 3 can also be moved in the X-axis direction and the Y-axis direction shown in FIG. 1, and a magnified image of the specimen 2 is moved to the center of the field of the eyepiece 18 by the movement of the stage 3 in the X and Y-axis directions.

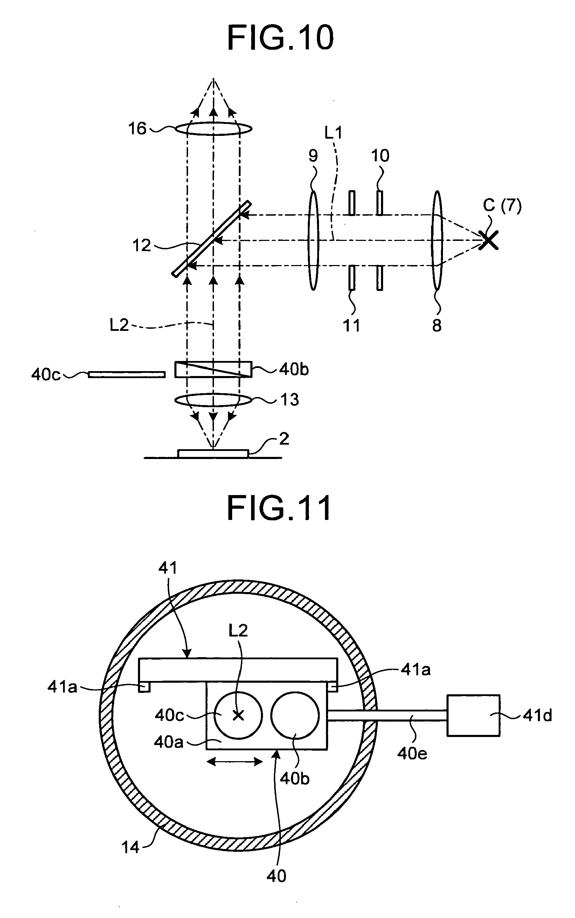

In the coaxial incident-light illumination system 19, as shown in FIGS. 8 and 10, the illumination lens 8, the aperture stop 10, the field stop 11, the illumination lens 9, and the wire grid polarizing beam splitter (hereinafter, referred to as the "PBS" simply) 12 are placed in order from the side of the light source 7. The imaging lens 16, the PBS 12, and the objective lens 13 compose the observation optical system 20C. Here, the PBS 12 is placed with respect to the λ/4 plate 40c so that the PBS 12 is tilted to a direction of vibration of linear polarized light to be reflected at a 45-degree angle with the λ/4 plate 40c.

At this time, the field stop 11 is placed so that the field stop 11 and the face of the specimen 2 are in a conjugate relation. Furthermore, the reflecting surface of the PBS 12 is placed to be located on a point at the intersection of an optical axis of a luminous flux emitted from the light source 7, i.e., the optical axis L1 of the coaxial incident-light illumination system 19 with the optical axis of the objective lens 13, i.e., the optical axis L2 of the observation optical system 20C.

With the microscope 500 configured as above, when the specimen 2 is observed by the differential interference contrast, the slider unit 40 is moved by the operation of the operation knob 40d, and, as shown in FIG. 9, the DIC prism 40b is placed on the optical axis L2 of the observation optical system 20C. Consequently, in the microscope 500, a luminous flux emitted from the light source 7 passes, as shown in FIG. 10, through the illumination lens 8, the aperture stop 10, the field stop 11, and the illumination lens 9, which are placed on the optical axis L1, and is guided to the PBS 12.

At this time, as shown in FIG. 10, the PBS 12 reflects linear polarized light in a predetermined vibration direction to a direction of the DIC prism 40b along the optical axis L2 of the observation optical system 20C. Then, the linear polarized light is split into two linear polarized lights of which the vibration directions are perpendicular to each other by the DIC prism 40b, and the two linear polarized lights are sent out in different directions from each other. The two linear polarized lights are collected by the objective lens 13, and delivered to the specimen 2.

The delivered two linear polarized lights are, as shown in FIG. 10, reflected as observation light by the specimen 2, and again pass through the objective lens 13, and then enter the DIC prism 40b. The DIC prism 40b synthesizes the two linear polarized lights to be the same axis as the optical axis L2, and sends out the two linear polarized lights parallel to the optical axis L2. The synthesized two linear polarized lights are transmitted through the PBS 12, and enter the eyepiece 18 through the imaging lens 16.

At this time, if the specimen 2 has the surface with asperities, an optical path difference occurs between reflected lights. Thus, two images based on the two linear polarized lights synthesized by the DIC prism 40b cause interference, and a differential interference image having contrast of light and dark based on a phase difference is generated. Then, when the lights passing through the DIC prism 40b enter the PBS 12, the PBS 12 transmits only the two linear polarized lights synthesized by the DIC prism 40b, and blocks the other light. Consequently, in the microscope 500, a stereoscopic differential interference image having contrast of light and dark can be visually observed through the eyepiece 18.

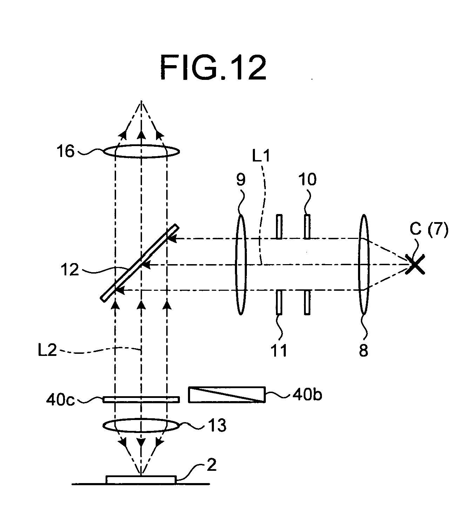

On the other hand, when a bright-field observation of the specimen 2 is made, the microscope 500 moves the slider unit 40 by the operation of the operation knob 40d, and, as shown in FIGS. 11 and 12, places the λ/4 plate 40c on the optical axis L2 of the observation optical system 20C.

Consequently, in the microscope 500, when a luminous flux emitted from the light source 7 reaches the PBS 12 as described above, as shown in FIG. 12, the PBS 12 reflects linear polarized light in a predetermined vibration direction to a direction of the λ/4 plate 40c along the optical axis L2 of the observation optical system 20C. Then, after the linear polarized light is converted into circular polarized light by the λ/4 plate 40c, the circular polarized light is collected by the objective lens 13, and delivered to the specimen 2.

The delivered circular polarized light is, as shown in FIG. 12, reflected as observation light by the specimen 2, and again passes through the objective lens 13, the λ/4 plate 40c, the PBS 12, and the imaging lens 16, and is visually observed as a bright-field image through the eyepiece 18. At this time, the circular polarized light reflected from the specimen 2 is converted into a linear polarized light by the λ/4 plate 40c, and out of the linear polarized light, only linear polarized light in a predetermined vibration direction is transmitted through the PBS 12. Therefore, in the microscope 500, a bright-field image can be visually observed through the eyepiece 18.

In this manner, since the microscope 500 uses the PBS 12 instead of a half mirror, a polarizer and an analyzer, which are used in a case of using a half mirror, are not necessary, and switching between the differential interference contrast observation and the bright-field observation can be easily made just by moving the unitized slider unit 40. Furthermore, since the microscope 500 uses the PBS 12 instead of a half mirror, an amount of decrease in light quantity caused by the PBS 12 is smaller than that is caused by the half mirror, so there is an advantage of an increase in brightness of an observation image.

Moreover, in the microscope 500, not only a polarizer and an analyzer are not necessary, but also the DIC prism 40b and the λ/4 plate 40c are unitized. Thus, in the microscope 500, unlike a conventional microscope, there is no need to remove/insert a lot of optical components from/into the microscope main body or the optical path, so it is free from cumbersome storage of the optical components to be removed/inserted, and there is an advantage of no dummy slider required.

Furthermore, since the microscope 500 does not need a polarizer and an analyzer because of using a wire grid polarizing beam splitter as the PBS 12, the weight of the coaxial incident-light illumination system 19 or the observation optical system 20C can be reduced as compared with a case of using a cube polarizing beam splitter.

A conventional optical microscope capable of making a differential interference contrast observation is generally equipped with an insertion/removal hole for inserting or removing a DIC prism. Thus, if the slider unit 40 is formed into a shape responding to such a general insertion/removal hole, the slider unit 40 can be used widely in conventional optical microscopes.

The microscope according to the present invention uses a wire grid polarizing beam splitter thereby effectively preventing the occurrence of flare, and can meet the field requirement in an observation at low magnification without increasing the apparatus size and ensure the brightness.

Furthermore, since the microscope according to the present invention employs the observation optical system including the DIC prism and the λ/4 wavelength plate, which are switchably placed on the optical axis between the polarizing beam splitter and the objective lens, the number of optical components to be removed/inserted at the time of switching the observation method can be reduced, and can be the one that is easy to operate the switching of observation methods.

Additional advantages and modifications will readily occur to those skilled in the art. Therefore, the invention in its broader aspects is not limited to the specific details and representative embodiments shown and described herein. Accordingly, various modifications may be made without departing from the scope of the general inventive concept as defined by the appended claims and their equivalents.

## Claims

1. A microscope (100; 200; 300; 400) comprising:
a wire grid polarizing beam splitter (12) that reflects light emitted from a light source (7) to a direction of an observation optical axis to cause the light to enter an objective lens (13), and transmits a reflected light from a specimen (2) to cause the reflected light to enter an imaging lens (16); and
a quarter wavelength plate (15) that is placed between the objective lens (13) and the specimen (2).

2. The microscope (200) according to claim 1, further comprising a second polarizing element (27) for generating polarized light in the same direction as a direction of vibration of linear polarized light reflected by the wire grid polarizing beam splitter (12), the second polarizing element (27) being placed in a coaxial incident-light illumination system (19A).

3. The microscope (200) according to claim 1, further comprising a third polarizing element (28) for generating polarized light in the same direction as a direction of vibration of linear polarized light that the wire grid polarizing beam splitter (12) transmits, the third polarizing element (28) being placed in an observation optical system (20A).

4. The microscope (200) according to claim 1, further comprising:
a second polarizing element (27) for generating polarized light in the same direction as a direction of vibration of linear polarized light reflected by the wire grid polarizing beam splitter (12), the second polarizing element (27) being placed in a coaxial incident-light illumination system (19A); and
a third polarizing element (28) for generating a polarized light in the same direction as a direction of vibration of linear polarized light that the wire grid polarizing beam splitter (12) transmits, the third polarizing element (28) being placed in an observation optical system (20A).

5. The microscope (300) according to claim 4, further comprising a variable magnification optical system (29) between the imaging lens (16) and the wire grid polarizing beam splitter (12), wherein
the coaxial incident-light illumination system (19A) is placed between the variable magnification optical system (29) and the objective lens (13).

6. The microscope (100; 200; 300; 400) according to claim 1, wherein the quarter wavelength plate (15) is insertable and removable.

7. The microscope (400) according to claim 1, further comprising an optical-element switching device (31) that holds at least two wire grid polarizing beam splitters (12A, 12B) with different extinction ratios, and inserts and removes the at least two wire grid polarizing beam splitters (12A, 12B) on the observation optical axis.

8. A microscope (500) comprising:
a polarizing beam splitter (12) that reflects light emitted from a light source (7) to a direction of an observation optical axis to cause the light to enter an objective lens (13), and transmits reflected light from a specimen (2) to cause the reflected light to enter an imaging lens (16); and
an observation optical system (20C) that makes an observation of imaging of the reflected light from the specimen (2), wherein
the observation optical system (20C) includes a differential interference contrast prism (40b) and a quarter wavelength plate (40c), the differential interference contrast prism (40b) and the quarter wavelength plate (40c) being switchably placed on the optical axis between the polarizing beam splitter (12) and the objective lens (13).

9. The microscope according to claim 8, wherein the polarizing beam splitter (12) is a wire grid polarizing beam splitter (12).

10. The microscope according to claim 9, further comprising an optical-element switching device (40; 40A; 40B) that holds the differential interference contrast prism (40b) and the quarter wavelength plate (40c), and inserts and removes the differential interference contrast prism (40b) and the quarter wavelength plate (40c) on the observation optical axis.
